# FASCICULE DE BREVET EUROPEEN

(11) **EP 1 120 662 B1**
(45) Date de publication et mention de la délivrance du brevet: **01.03.2006**
(21) Numéro de dépôt: 00101502.3
(22) Date de dépôt: 26.01.2000
(51) Int. Cl.: G01R 31/317, G06F 1/00

(54) **Procédé pour tester un circuit intégré comportant des parties matérielles et/ou logicielles ayant un caractère de confidentialité**
Verfahren zur Prüfung einer integrierten Schaltung mit vertraulichen Software- oder Hardware-elementen
Method for testing an integrated circuit having confidential software or hardware elements

(43) Date de publication de la demande: 01.08.2001
(73) Titulaire: EM Microelectronic-Marin SA, 2074 Marin (CH)
(72) Inventeur: Fabrice, Walter, 2047 Marin (CH); Hugues, Blangy, 2000 Neuchâtel (CH)
(74) Mandataire: Ravenel, Thierry Gérard Louis

(56) Documents cités:
- DE-A- 19 931 047
- US-A- 5 526 311
- US-A- 5 530 749

## Description

La présente invention est relative à des circuits intégrés contenant des parties matérielles et/ou logicielles présentant un caractère de confidentialité.

La fabrication de tout circuit intégré implique habituellement une procédure de test destinée à contrôler le bon fonctionnement de ses circuits matériels et le ou les logiciels qui y sont souvent mémorisés. Lorsque de telles parties matérielles et/ou logicielles sont confidentielles, il convient que cette procédure de test ne puisse les divulguer à des personnes non autorisées.

Le document US 5,039,850 décrit un circuit intégré de ce type qui contient lui-même son sous-programme de test. Il comporte une mémoire EEPROM destinée à contenir des informations secrètes dont un code d'identification du circuit intégré et des données confidentielles, par exemple.

Lorsqu'une procédure de test de ce circuit intégré doit être mise en oeuvre, il est d'abord vérifié si le code secret a déjà été mémorisé. Si ce n'est pas le cas le sous-programme de test est exécuté sur tous les éléments non confidentiels du circuit. Si au contraire le code secret a déjà été mémorisé, le testeur doit envoyer le même code et s'il y a coïncidence entre celui-ci et le code mémorisé, la mémoire EEPROM est initialisée et les données confidentielles deviennent disponibles pour être exploitées par le circuit intégré. Cela veut dire que ces données restent confidentielles vis-à-vis du testeur, car un test ne peut être effectué que si le code secret n'est pas encore mémorisé. Cependant ceci signifie aussi qu'aucun test ne peut être appliqué à ces données confidentielles.

On comprend ainsi que le processus connu de cette antériorité vise uniquement le cas où le test est toujours effectué avant que les données confidentielles ne soient introduites dans le circuit intégré.

La présente invention a pour but de fournir un procédé de test de circuits intégrés par lequel un test peut être exécuté sur les parties confidentielles que contient le circuit sans que le contenu de ces parties devienne accessible à une personne non autorisée.

Elle a donc pour objet un procédé de test d'un circuit intégré contenant des éléments ayant un caractère de confidentialité à l'aide d'un testeur, présentant les caractéristiques définies dans la revendication 1.

Grâce à ces caractéristiques, le testeur peut avoir accès aux éléments à caractère confidentiel pour les tester, mais seulement s'il parvient à engendrer un mot de passe ayant une relation prédéterminée avec le mot de passe engendré dans le circuit intégré. L'accès aux éléments protégés est ainsi parfaitement préservé.

L'invention a également pour objet un circuit intégré présentant les caractéristiques de la revendication 7.

L'invention a encore pour objet un testeur présentant les caractéristiques de la revendication 11.

D'autres particularités de l'invention résultent des revendications dépendantes.

D'autres caractéristiques et avantages de l'invention apparaîtront au cours de la description qui va suivre, donnée uniquement à titre d'exemple et faite en se référant aux dessins annexés sur lesquels :
- la figure 1 est un schéma simplifié d'un circuit intégré CI présentant des parties ayant un caractère de confidentialité, connecté à un testeur pendant que le procédé de l'invention est mis en oeuvre;
- la figure 2 représente une partie du testeur pour illustrer une variante de l'invention.

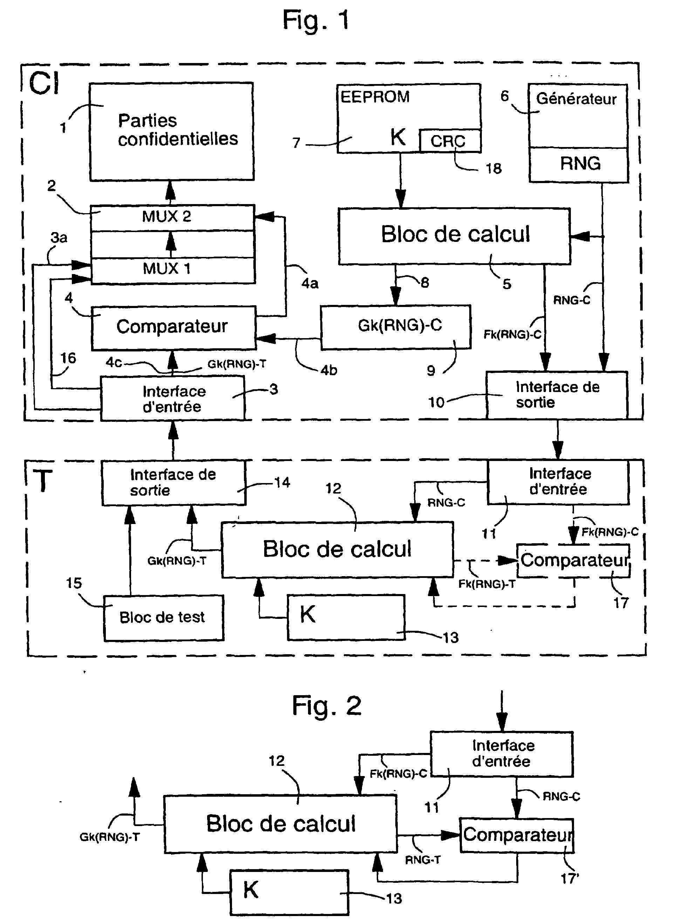

Sur la figure 1, on a représenté un circuit intégré CI à tester ainsi qu'un testeur T. Lorsque le testeur T est branché sur le circuit CI ou sur un autre circuit intégré de même structure, l'ensemble permet de mettre en oeuvre le mode d'exécution préféré de l'invention.

Le circuit intégré CI comprend une section 1 comportant des parties matérielles et/ou logicielles ayant un caractère de confidentialité et auxquelles l'accès est réservé. II peut s'agir par exemple de mémoires ROM et/ou RAM contenant de l'information confidentielle telle que des algorithmes, des programmes, des données, ou des procédures de test de cette section confidentielle. Peuvent également faire partie de cette partie confidentielle une mémoire EEPROM dans laquelle sont enregistrés des paramètres de calibrage de modules électroniques de référence associés à des signatures correspondantes, des clés de chiffrement, des signatures de test etc. Il peut également s'agir de parties matérielles du circuit, comme les modules de référence tels qu'un oscillateur ou un régulateur de tension par exemple. Les spécialistes comprendront que la nature de l'information confidentielle ou celle des parties matérielles à protéger peut être quelconque, l'invention ayant trait uniquement à un processus d'authentification permettant de tester la section confidentielle 1 du circuit CI.

La section confidentielle ou les parties confidentielles 1 sont accessibles pour être testées par l'intermédiaire d'une barrière 2 donnant aux parties 1 un accès conditionnel. Cette barrière 2 peut être matérialisée sous forme de deux multiplexeurs Mux 1 et Mux 2 connectés entre une interface d'entrée 3 du circuit CI et la section confidentielle 1. Le multiplexeur Mux 2 peut être commandé pour autoriser le passage des informations de test à partir de l'interface 3 par l'intermédiaire d'une connexion 3a et ce uniquement si un signal de commande est délivré par un comparateur 4 sur une connexion 4a.

La connexion 4a est reliée à la sortie du comparateur 4 dont les entrées sont reliées respectivement à des connexions 4b et 4c, cette dernière étant reliée à l'interface 3.

Le circuit CI comprend également un bloc de chiffrement 5 dans lequel peut être calculé un premier mot de passe Gₖ(RNG)-C à l'aide d'un algorithme de chiffrement. Celui-ci travaille avec un nombre aléatoire RNG-C engendré dans un générateur 6 de nombres aléatoires et avec une clé de chiffrement k mémorisée dans une section 7 d'une mémoire EEPROM. Le générateur 6 et la section de mémoire 7 sont donc connectés au bloc de chiffrement 5.

Ce dernier est également connecté par une sortie 8 de mot de passe à un registre de mot de passe 9 pour recevoir le premier mot de passe Gₖ(RNG)-C qui est par ailleurs relié à la connexion 4b vers le comparateur 4.

L'algorithme de chiffrement mis en oeuvre dans le bloc de chiffrement 5 peut être un algorithme public connu en soi. Par exemple, il peut s'agir de l'algorithme standard connu sous le vocable DES par les spécialistes.

Le générateur de nombres aléatoires 6 est également relié à une interface de sortie 10 du circuit CI.

Le testeur T comprend une interface d'entrée 11 qui est connectée, lors d'un test, à l'interface de sortie 10 d'un circuit intégré CI à tester. Cette interface d'entrée 11 peut ainsi recevoir de ce dernier le nombre aléatoire RNG-C qui, au moment du branchement pour la réalisation d'un test, est présent dans le générateur de nombres aléatoires 6 du circuit CI.

Le testeur T comprend également un bloc de chiffrement 12 connecté à l'interface d'entrée 11 pour en recevoir le nombre aléatoire RNG-C engendré dans le circuit intégré CI. Ce bloc de chiffrement 12 est agencé pour effectuer un chiffrement à l'aide d'un algorithme identique à celui avec lequel travaille le bloc de chiffrement 5 du circuit CI. Le chiffrement dans le testeur T est effectué à l'aide d'une clé de chiffrage k rangée dans une section 13 d'une mémoire EEPROM du testeur T. Cette clé k est la même que celle que contient la section de mémoire EEPROM 7 du circuit intégré CI.

Ainsi, le testeur T est capable de calculer un second mot de passe Gₖ(RNG)-T sur la base du nombre aléatoire RNG-C.

Le testeur T comprend également une interface de sortie 14 connectée à la sortie du bloc de chiffrement 12, afin que le mot de passe qui y est calculé puisse être acheminé vers le circuit intégré CI.

Cette interface de sortie 14 est également reliée à un bloc de test 15 capable de mettre en oeuvre les fonctions de test auxquelles le circuit CI doit être soumis et dont les informations sont acheminées par l'intermédiaire des interfaces 14 et 3 vers le multiplexeur Mux 2 du circuit intégré CI.

Les interfaces 3, 10, 11 et 14 sont, de façon connue en soi, des "machines d'état" qui à l'aide des horloges internes respectives du circuit Cl et du testeur T gèrent des protocoles d'émission et de réception d'acheminement des données entre les deux composants CI et T.

Le multiplexeur Mux 1 connecté en série en amont du multiplexeur Mux 2 vis-à-vis du testeur T, est connecté à l'interface 3 pour aiguiller les informations nécessaires à l'authentification vers les parties concernées du circuit telles que la section de mémoire EEPROM 7 et bloc de chiffrement 5 (pour simplifier les connexions correspondantes n'ont pas été représentées).

Ce premier multiplexeur Mux 1 est commandé ("ouvert") par un signal de mode de test transitant par un conducteur 16 en provenance du testeur T, tandis que le multiplexeur Mux 2 est commandé par la sortie du comparateur 4 (connexion 4a).

Les étapes essentielles de la procédure de test du circuit intégré CI se déroulent de la façon suivante.

Lorsque le testeur T est connecté au circuit intégré CI, la procédure de test est initiée par l'envoi du signal de mode de test passant sur le conducteur 16. Ceci provoque l'introduction dans le bloc de calcul 5 du nombre aléatoire RNG-C généré, à l'instant considéré, par le générateur 6 et de la clé k qui est extraite de la mémoire 7. Le premier mot de passe Gₖ(RNG)-C est alors calculé à l'aide de l'algorithme de chiffrement DES par exemple et ce mot de passe est placé dans le registre 9.

Le nombre aléatoire RNG-C est également envoyé vers le testeur T en étant acheminé par les interfaces 10 et 11 pour être appliqué au bloc de calcul 12 dans lequel est effectué également un calcul à l'aide du même algorithme de chiffrement, à partir de la clé de chiffrement k extraite de la section de mémoire 13 et du nombre aléatoire RNG-C reçu. Ce calcul de chiffrement aboutira à la production d'un second mot de passe Gₖ(RNG)-T. Ce dernier est acheminé au circuit intégré CI par l'intermédiaire des interfaces 14 et 3 puis appliqué au comparateur 4.

Le comparateur 4 est agencé pour effectuer une comparaison bit à bit des deux mots de passe Gₖ(RNG)-C et Gₖ(RNG)-T qui lui sont appliqués.

S'il y a coïncidence entre les deux mots de passe appliqués au comparateur 4, cela voudra dire que l'authentification du testeur T a réussi et que ce dernier est donc habilité à avoir accès aux parties confidentielles 1. Le multiplexeur Mux 2 est commandé par le signal transitant sur la connexion 4a moyennant quoi la voie menant du testeur T aux parties confidentielles 1 du circuit intégré CI via la connexion 3a, est ouverte. Le testeur T peut alors accomplir les opérations de test requises par l'intermédiaire du bloc de test 15 pour vérifier les parties confidentielles 1 du circuit intégré CI quant à leur bon fonctionnement et si c'est le cas valider le circuit en question. A défaut d'une coïncidence, l'accès aux parties confidentielles 1 demeurera interdit au testeur T.

Afin d'augmenter la sécurité d'accès, et selon une première variante de l'invention illustrée en pointillés sur la figure 1, il est possible de n'autoriser le calcul du second mot de passe Gk(RNG)-T par le bloc de calcul 12 du testeur T qu'après vérification d'un troisième mot de passe préalablement calculé. A cet effet, avant le calcul du premier mot de passe Gₖ(RNG)-C dans le bloc de calcul 5 du circuit intégré CI, il est procédé au calcul d'un troisième mot de passe Fₖ(RNG)-C, calculé éventuellement sur un nombre de coups d'horloge différent de celui sur lequel est calculé le premier mot de passe Gₖ(RNG)-C.

Ce troisième mot de passe Fₖ(RNG)-C est envoyé au testeur T à la suite du nombre aléatoire RNG-C après initialisation de la procédure d'authentification, à travers les interfaces 10 et 11. Le bloc de calcul 12 du testeur T doit alors calculer également un quatrième mot de passe Fₖ(RNG)-T qui est appliqué à un comparateur 17 faisant partie du testeur T, ce comparateur étant connecté d'une part à l'interface 11 dont il reçoit le troisième mot de passe Fₖ(RNG)-C calculé dans le circuit intégré CI et d'autre part au bloc de calcul 12 pour en recevoir le quatrième mot de passe Fₖ(RNG)-T qui y est calculé.

Ce n'est que lorsque le comparateur 17 constate une coïncidence entre les troisième et quatrième mots de passe Fₖ(RNG)-C et Fₖ(RNG)-T qu'il envoie au bloc de calcul 12 un signal d'autorisation de calcul du second mot de passe Gₖ(RNG)-T. A cet effet, le comparateur 17 est connecté par sa sortie à ce bloc de calcul 12.

Les fonctions Fₖ(RNG)-C et Fₖ(RNG)-T permettent d'authentifier le circuit intégré CI, tandis que les fonctions Gₖ(RNG)-C et Gₖ(RNG)-T permettent d'authentifier le testeur. Cette dernière partie constitue la partie importante de l'objet de l'invention, dans le but d'interdire à un testeur non autorisé d'accéder à des parties confidentielles du circuit intégré.

Selon une autre variante de l'invention qui est analogue à la variante venant d'être décrite et qui est représentée sur la figure 2, le troisième mot de passe Fₖ(RNG)-C est également calculé dans le circuit intégré Cl comme précédemment décrit et acheminé au testeur T par l'intermédiaire des interfaces 10 et 11. Dans ce cas, ce troisième mot de passe est appliqué au bloc de calcul 12 qui est alors agencé pour effectuer un calcul sur ce mot à l'aide de l'algorithme inverse de celui utilisé pour le calcul du quatrième mot de passe Fₖ(RNG)-T. Ce calcul aura comme résultat un nombre aléatoire RNG-T qui est appliqué à un comparateur 17'. Celui-ci est à cet effet connecté par l'une de ses entrées au bloc de calcul 12, son autre entrée étant reliée à l'interface 11 pour recevoir RNG-C. La sortie du comparateur 17' est reliée au bloc de calcul 12 pour ne lui envoyer un signal d'autorisation de calcul du second mot de passe Gₖ(RNG)-T que si le comparateur 17' constate une coïncidence entre les nombres aléatoires RNG-C et RNG-T appliqués à ses entrées. Ce signal d'autorisation de calcul permet alors de déclencher le calcul du second mot de passe Gₖ(RNG)-T dans le bloc de calcul 12.

De préférence, lors de la fabrication du circuit intégré Cl, les bits de la section de mémoire EEPROM 7 destinés à la mémorisation de la clé de chiffrement k sont tous portés à une valeur prédéterminée (par exemple tous les bits sont exclusivement formés de bits de niveau 0 ou exclusivement de bits de niveau 1). L'introduction de la clé de chiffrement dans cette section de mémoire 7 est effectuée dans une phase préliminaire aux tests pendant laquelle un contrôle de cohérence est effectué par l'intermédiaire d'un bloc de vérification de redondance 18 (Code redundancy check) que comprend la section de mémoire EEPROM 7. Le testeur T effectue cette opération qui, initialement, aboutit à un échec du fait des valeurs initiales des bits de mémorisation de la clé et de celle de la clé envoyée par principe différente. Le testeur T constatant que la clé n'est pas encore mémorisée, il en introduit une dans la section de mémoire EEPROM 7 après quoi l'emplacement correspondant de la section de mémoire EEPROM 7 est bloqué en écriture et en lecture. La procédure de test telle que décrite ci-dessus peut alors commencer et se dérouler comme décrit ci-dessus.

Il est à noter que les mots de passe calculés dans le circuit intégré et le testeur et soumis aux comparaisons respectives n'ont pas nécessairement à être identiques. Il suffit qu'ils aient une relation prédéterminée entre eux qui sera vérifiée au cours de ces comparaisons. Le terme "coïncidence" doit donc être compris dans une acception large.

## Revendications

1. Procédé de test d'un circuit intégré (CI) contenant des parties matérielles et/ou logicielles (1) ayant un caractère de confidentialité, à l'aide d'un testeur (T), ce procédé étant **caractérisé en ce qu'**il consiste :
- dans ledit circuit intégré (CI) :
à engendrer un nombre aléatoire (RNG-C),
à chiffrer ce nombre aléatoire (RNG-C) à l'aide d'une clé (k) mémorisée dans le circuit intégré (CI) par l'intermédiaire d'un algorithme de chiffrement pour obtenir un premier mot de passe (Gₖ(RNG)-C) et
à envoyer le nombre aléatoire (RNG-C) vers ledit testeur (T),
- et, dans ledit testeur (T) :
à chiffrer parallèlement ledit nombre aléatoire (RNG-C) reçu à l'aide d'une clé (k) identique à celle utilisée dans ledit circuit intégré par l'intermédiaire d'un algorithme de chiffrement identique à celui mis en oeuvre dans ledit circuit intégré (CI), pour engendrer un second mot de passe (Gₖ(RNG)-T), et
à envoyer ledit second mot de passe (Gₖ(RNG-T)) du testeur (T) vers ledit circuit intégré (CI),
- puis, dans ledit circuit intégré (CI),
à comparer lesdits premier (Gₖ(RNG)-C) et second (Gₖ(RNG)-T) mots de passe,
à libérer une voie de test (3a) menant dudit testeur auxdites parties à caractère confidentiel (1), seulement si la comparaison établit une coïncidence entre lesdits premier et second mots de passe (Gₖ(RNG)-C; Gₖ(RNG)-T), et
à effectuer le test desdits éléments à caractère confidentiel (1).

2. Procédé selon la revendication 1, **caractérisé en ce qu'**il consiste également :
- dans ledit circuit intégré (CI) :
à chiffrer ledit nombre aléatoire (RNG-C) à l'aide de ladite clé (k) mémorisée dans le circuit intégré (CI) par l'intermédiaire dudit algorithme de chiffrement pour obtenir un troisième mot de passe (Fₖ(RNG)-C);
à envoyer ledit troisième mot de passe (Fₖ(RNG)-C) audit testeur (T); et
- dans ledit testeur (T) :
à chiffrer ledit nombre aléatoire (RNG-C) reçu à l'aide de ladite clé (k) mémorisée dans ledit testeur par l'intermédiaire dudit algorithme de chiffrement pour obtenir un quatrième mot de passe (Fₖ(RNG)-T);
à comparer lesdits troisième et quatrième mots de passe (Fₖ(RNG)-C; Fₖ(RNG)-T); et
à autoriser le chiffrement dudit second mot de passe (Gₖ(RNG)-T) par ledit testeur (T) seulement s'il y a coïncidence entre lesdits troisième et quatrième mots de passe (Fₖ(RNG)-C; Fₖ(RNG)-T).

3. Procédé selon la revendication 1, **caractérisé en ce qu'**il consiste également :
- dans ledit circuit intégré (CI) :
à chiffrer ledit nombre aléatoire (RNG-C) à l'aide de ladite clé (k) mémorisée dans le circuit intégré (CI) par l'intermédiaire dudit algorithme de chiffrement pour obtenir un troisième mot de passe (Fₖ(RNG)-C);
à envoyer ledit troisième mot de passe (Fₖ(RNG)-C) audit testeur (T); et
- dans ledit testeur (T) :
à opérer le chiffrement inverse dudit troisième mot de passe reçu (Fₖ(RNG)-C), à l'aide de ladite clé (k) mémorisée dans ledit testeur (T) par l'intermédiaire dudit algorithme de chiffrement pour retrouver un nombre aléatoire calculé (RNG-T);
à comparer le nombre aléatoire (RNG-C) reçu dudit circuit intégré (CI) audit nombre aléatoire calculé (RNG-T); et
à autoriser le chiffrement dudit second mot de passe (Gₖ(RNG)-T) par ledit testeur (T) seulement s'il y a coïncidence entre lesdits nombres aléatoires reçu et calculé (RNG-T; RNG-T).

4. Procédé selon l'une des revendications 2 et 3, **caractérisé en ce que** le chiffrement desdits troisième et/ou quatrième mots de passe (Fₖ(RNG)-C; Fₖ(RNG)-T) étant réalisé sur la base d'un nombre de coups d'horloge différent de celui utilisé pour le chiffrement desdits premier et second mots de passe (Gₖ(RNG)-C; Gₖ(RNG)-T).

5. Procédé selon l'une des revendications 1 à 4, **caractérisé en ce qu'**il consiste, en ce qui concerne lesdites coïncidences, à vérifier l'égalité entre lesdits mots de passe (Gₖ(RNG)-C; Gₖ(RNG)-T) - (Fₖ(RNG)-C; Fₖ(RNG)-T) -, respectivement lesdits nombres aléatoires reçu et calculé (RNG; RNG-T).

6. Procédé selon l'une des revendications 1 à 5, **caractérisé en ce qu'**il consiste, à la fabrication dudit circuit intégré (CI), à mémoriser une valeur prédéterminée de ladite clé de chiffrement, et lors de l'exécution de la procédure de test à l'aide dudit testeur (T), à envoyer audit circuit intégré (CI), une valeur de clé de chiffrement (k), à vérifier si ladite clé de chiffrement envoyée (k) présente la valeur prédéterminée mémorisée dans ledit circuit (CI), à commander la mémorisation de ladite clé envoyée dans ledit circuit (CI) au cas où une inégalité est constatée lors de ladite vérification et à bloquer dans ce cas la mémorisation dans ledit circuit (CI) de toute autre clé de chiffrement.

7. Circuit intégré (CI) comprenant des parties matérielles et/ou logicielles ayant un caractère de confidentialité (1) et des moyens (2, 3, 16) pour acheminer conditionnellement vers lesdites parties matérielles et/ou logicielles des informations de test, **caractérisé en ce qu'**il comprend :
- un générateur de nombres aléatoires (6);
- des moyens (7) pour mémoriser une clé de chiffrement (k);
- des moyens de calcul (12) pour, à l'aide d'un algorithme de chiffrement, calculer un premier mot de passe (Gₖ(RNG)-C) à partir de ladite clé et d'un nombre aléatoire engendré (RNG-C);
- des moyens (10) pour acheminer un nombre aléatoire (RNG-C) vers l'extérieur; et
- des moyens (4) pour comparer ledit premier mot de passe calculé (Gₖ(RNG-C) avec un second mot de passe reçu de l'extérieur (Gₖ(RNG-T), ledit second mot de passe étant calculé selon le nombre aléatoire engendré par le générateur, lesdits moyens de comparaison étant connectés auxdits moyens d'acheminement (2, 3, 16) de manière à ne les rendre transparents auxdites informations de test que s'ils constatent une coïncidence entre lesdits premier et second mots de passe (Gₖ(RNG)-C; Gₖ(RNG)-T).

8. Circuit intégré selon la revendication 7, **caractérisé en ce qu'**il comprend des moyens (9) pour mémoriser ledit premier mot de passe (Gₖ(RNG)-C) calculé, lesdits moyens de mémorisation étant placés avant les moyens de comparaison pour leur fournir ledit premier mot de passe mémorisé au moment de la comparaison avec le second mot de passe (Gₖ(RNG-T).

9. Circuit intégré selon la revendication 7, **caractérisé en ce que** les moyens de mémorisation de la clé de chiffrement sont une mémoire EEPROM qui comprend également un bloc de vérification de redondance.

10. Circuit intégré selon la revendication 7, **caractérisé en ce que** les moyens de calcul sont prévus pour calculer un troisième mot de passe (Fₖ(RNG)-C) à l'aide de la clé de chiffrement, du nombre aléatoire engendré (RNG-C) et de l'algorithme de chiffrement du circuit, ledit troisième mot de passe étant destiné à être envoyé vers l'extérieur avec le nombre aléatoire à un testeur spécifique.

11. Testeur de circuits intégrés comprenant des parties matérielles et/ou logicielles ayant un caractère de confidentialité, ce testeur comportant des moyens (15) pour effectuer un test de bon fonctionnement desdites parties matérielles et/ou logicielles et des moyens pour acheminer les informations correspondantes audit circuit (CIl), **caractérisé en ce qu'**il comprend :
- des moyens (11) pour recevoir un nombre aléatoire (RNG-C) engendré par un circuit intégré à tester;
- des moyens (13) pour mémoriser une clé de chiffrement (k); et
- des moyens de calcul (12) pour, à l'aide d'un algorithme de chiffrement, calculer un second mot de passe (Gₖ(RNG)-T) à partir de ladite clé de chiffrement (k) et du nombre aléatoire reçu (RNG-C);
- lesdits moyens de calcul (12) étant connectés auxdits moyens d'acheminement (14) pour envoyer ledit second mot de passe (Gₖ(RNG)-T) calculé audit circuit intégré (CI).

12. Testeur selon la revendication 11, **caractérisé en ce que** lesdits moyens de calcul (12) sont également agencés pour, à l'aide d'un algorithme de chiffrement, calculer un quatrième mot de passe (Fₖ(RNG)-T) à partir de ladite clé de chiffrement (k) et du nombre aléatoire reçu (RNG-C);
**en ce que** lesdits moyens (11) pour recevoir ledit nombre aléatoire sont également agencés pour recevoir un troisième mot de passe (Fₖ(RNG)-C) calculé dans ledit circuit intégré (CI), et
**en ce qu'**il comprend également des moyens de comparaison (17) pour vérifier la coïncidence entre ledit troisième mot de passe reçu (Fₖ(RNG)-C) et ledit quatrième mot de passe calculé (Fₖ(RNG)-T), lesdits moyens de calcul n'étant autorisé à calculer ledit second mot de passe (Gₖ(RNG)-T) que si les moyens de comparaison (17) constatent une coïncidence prédéterminée entre lesdits troisième et quatrième mots de passe.

13. Testeur selon la revendication 11, **caractérisé en ce que** :
- lesdits moyens (11) pour recevoir ledit nombre aléatoire sont également agencés pour recevoir un troisième mot de passe (Fₖ(RNG)-C) calculé dans ledit circuit intégré (CI), et
- lesdits moyens de calcul (12) sont également agencés pour, à l'aide d'un algorithme de chiffrement inverse, et à partir dudit troisième mot de passe (Fₖ(RNG)-C) calculé dans ledit circuit intégré (CI) et de ladite clé de chiffrement (k), recalculer un nombre aléatoire (RNG-T); et
**en ce qu'**il comprend également des moyens de comparaison (17') pour vérifier la coïncidence entre ledit nombre aléatoire reçu (RNG)-C) et ledit nombre aléatoire calculé (RNG-T), lesdits moyens de calcul n'étant autorisé à calculer ledit second mot de passe (Gₖ(RNG-T) que si les moyens de comparaison (17') constatent une coïncidence prédéterminée entre lesdits nombres aléatoires (RNG-C et RNG-T).

## Patentansprüche

1. Verfahren zum Prüfen einer integrierten Schaltung (CI), die Hardware- und/oder Software-Abschnitte (1) mit Vertraulichkeitscharakter enthält, mit Hilfe einer Prüfeinrichtung (T), wobei dieses Verfahren **dadurch gekennzeichnet ist, dass** es darin besteht:
- in der integrierten Schaltung (CI):
eine Zufallszahl (RNG-C) zu erzeugen,
diese Zufallszahl (RNG-C) mit Hilfe eines in der integrierten Schaltung (CI) gespeicherten Schlüssels (k) über einen Chiffrieralgorithmus zu chiffrieren, um ein erstes Passwort (Gₖ(RNG)-C) zu erhalten, und
die Zufallszahl (RNG-C) zu der Prüfeinrichtung (T) zu schicken,
- und in der Prüfeinrichtung (T):
die empfangene Zufallszahl (RNG-C) mit Hilfe eines Schlüssels (k), der mit jenem übereinstimmt, der in der integrierten Schaltung verwendet wird, über einen Chiffrieralgorithmus, der mit jenem, der in der integrierten Schaltung (CI) verwendet wird, übereinstimmt, parallel zu chiffrieren, um ein zweites Passwort (Gₖ(RNG)-T) zu erzeugen, und
das zweite Passwort (Gₖ(RNG)-T) der Prüfeinrichtung (T) zu der integrierten Schaltung (CI) zu schicken, und
- dann in der integrierten Schaltung (Cl)
das erste Passwort (Gₖ(RNG)-C) und das zweite Passwort (Gₖ(RNG)-T) miteinander zu vergleichen,
einen Prüfweg (3a), der von der Prüfeinrichtung zu den Abschnitten (1) mit vertraulichem Charakter führt, nur freizugeben, wenn der Vergleich eine Übereinstimmung zwischen dem ersten und dem zweiten Passwort (Gₖ(RNG)-C); (Gₖ(RNG)-T) ergibt, und
die Prüfung der Elemente (1) mit vertraulichem Charakter auszuführen.

2. Verfahren nach Anspruch 1, **dadurch gekennzeichnet, dass** es außerdem darin besteht:
- in der integrierten Schaltung (CI):
die Zufallszahl (RNG-C) mit Hilfe des in der integrierten Schaltung (CI) gespeicherten Schlüssels (k) über den Chiffrieralgorithmus zu chiffrieren, um ein drittes Passwort (Fₖ(RNG)-C) zu erhalten;
das dritte Passwort (Fₖ(RNG)-C) zu der Prüfeinrichtung (T) zu schikken; und
- in der Prüfeinrichtung (T):
die empfangene Zufallszahl (RNG-C) mit Hilfe des in der Prüfeinrichtung gespeicherten Schlüssels (k) über den Chiffrieralgorithmus zu chiffrieren, um ein viertes Passwort (Fₖ(RNG)-T) zu erhalten;
das dritte Passwort (Fₖ(RNG)-C) und das vierte Passwort (Fₖ(RNG)-T) miteinander zu vergleichen; und
die Chiffrierung des zweiten Passworts (Gₖ(RNG)-T) durch die Prüfeinrichtung (T) nur dann zuzulassen, wenn zwischen dem dritten und dem vierten Passwort (Fₖ(RNG)-C; Fₖ(RNG)-T) eine Übereinstimmung besteht.

3. Verfahren nach Anspruch 1, **dadurch gekennzeichnet, dass** es außerdem darin besteht:
- in der integrierten Schaltung (CI):
die Zufallszahl (RNG-C) mit Hilfe des in der integrierten Schaltung (CI) gespeicherten Schlüssels (k) über den Chiffrieralgorithmus zu chiffrieren, um ein drittes Passwort (Fₖ(RNG)-C) zu erhalten; und
das dritte Passwort (Fₖ(RNG)-C) zu der Prüfeinrichtung (T) zu schikken; und
- in der Prüfeinrichtung (T):
die inverse Chiffrierung des empfangenen dritten Passworts (Fₖ(RNG)-C) mit Hilfe des in der Prüfeinrichtung (T) gespeicherten Schlüssels (k) über den Chiffrieralgorithmus auszuführen, um eine berechnete Zufallszahl (RNG-T) wiederzugewinnen;
die von der integrierten Schaltung (CI) empfangene Zufallszahl (RNG-C) mit der berechneten Zufallszahl (RNG-T) zu vergleichen; und
die Chiffrierung des zweiten Passworts (Gₖ(RNG)-T) durch die Prüfeinrichtung (T) nur dann zuzulassen, wenn zwischen der empfangenen und der berechneten Zufallszahl (RNG-T; RNG-T) eine Übereinstimmung besteht.

4. Verfahren nach einem der Ansprüche 2 und 3, **dadurch gekennzeichnet, dass** die Chiffrierung des dritten und/oder des vierten Passworts (Fₖ(RNG)-C; Fₖ(RNG)-T) auf der Grundlage einer Anzahl von Taktschlägen ausgeführt wird, die von jener verschieden ist, die für die Chiffrierung des ersten und des zweiten Passworts (Gₖ(RNG)-C; Gₖ(RNG)-T) verwendet wird.

5. Verfahren nach einem der Ansprüche 1 bis 4, **dadurch gekennzeichnet, dass** es hinsichtlich der Übereinstimmungen darin besteht, die Gleichheit zwischen den Passwörtern (Gₖ(RNG)-C; Gₖ(RNG)-T) - (Fₖ(RNG)-C; Fₖ(RNG)-T) - und den Zufallszahlen (RNG; RNG-T), die empfangen bzw. berechnet werden, zu verifizieren.

6. Verfahren nach einem der Ansprüche 1 bis 5, **dadurch gekennzeichnet, dass** es bei der Fertigung der integrierten Schaltung (CI) darin besteht, einen vorgegebenen Wert des Chiffrierschlüssels zu speichern, und dann bei der Ausführung des Prüfverfahrens mit Hilfe der Prüfeinrichtung (T) darin besteht, an die integrierte Schaltung (CI) einen Wert des Chiffrierschlüssels (k) zu schicken, zu verifizieren, ob der geschickte Chiffrierschlüssel (k) den in der Schaltung (CI) gespeicherten vorgegebenen Wert besitzt, die Speicherung des geschickten Schlüssels in der Schaltung (CI) zu befehlen, falls bei dieser Verifikation eine Ungleichheit festgestellt wird, und die Speicherung jedes anderen Chiffrierschlüssels in der Schaltung (CI) in diesem Fall zu sperren.

7. Integrierte Schaltung (CI), die Hardware- und/oder Software-Abschnitte mit vertraulichem Charakter (1) sowie Mittel (2, 3, 16) zum bedingten Zuführen von Prüfinformationen an die Hardware- und/oder Softwareabschnitte umfasst, **dadurch gekennzeichnet, dass** sie umfasst:
- einen Zufallszahl-Generator (6);
- Mittel (7) zum Speichern eines Chiffrierschlüssels (k);
- Rechenmittel (12), um mit Hilfe eines Chiffrieralgorithmus ein erstes Passwort (Gₖ(RNG)-C) anhand des Schlüssels und einer erzeugten Zufallszahl (RGN-C) zu berechnen;
- Mittel (10) zum Leiten einer Zufallszahl (RNG-C) nach außen; und
- Mittel (4) zum Vergleichen des berechneten ersten Passworts (Gₖ(RNG)-C) mit einem von außen empfangenen zweiten Passwort (Gₖ(RNG)-T), wobei das zweite Passwort anhand der durch den Generator erzeugten Zufallszahl berechnet wird, wobei die Vergleichsmittel mit den Ausgabemitteln (2, 3, 16) in der Weise verbunden sind, dass sie für die Prüfinformationen nur durchlässig sind, wenn sie eine Übereinstimmung zwischen dem ersten Passwort (Gₖ(RNG)-C) und dem zweiten Passwort (Gₖ(RNG)-T) feststellen.

8. Integrierte Schaltung nach Anspruch 7, **dadurch gekennzeichnet, dass** sie Mittel (9) umfasst, um das berechnete erste Passwort (Gₖ(RNG)-C) zu speichern, wobei die Speichermittel vor den Vergleichsmitteln angeordnet sind, um an sie das gespeicherte erste Passwort zum Zeitpunkt des Vergleichs mit dem zweiten Passwort (Gₖ(RNG)-T) zu liefern.

9. Integrierte Schaltung nach Anspruch 7, **dadurch gekennzeichnet, dass** die Mittel zum Speichern des Chiffrierschlüssels ein EEPROM-Speicher sind, der außerdem einen Redundanzverifikationsblock enthält.

10. Integrierte Schaltung nach Anspruch 7, **dadurch gekennzeichnet, dass** die Rechenmittel vorgesehen sind, um ein drittes Passwort (Fₖ(RNG)-C) mit Hilfe des Chiffrierschlüssels, der erzeugten Zufallszahl (RNG-C) und des Chiffrieralgorithmus der Schaltung zu berechnen, wobei das dritte Passwort dazu bestimmt ist, mit der Zufallszahl nach außen zu einer bestimmten Prüfeinrichtung geschickt zu werden.

11. Prüfeinrichtung für integrierte Schaltungen, die Hardware- und/oder Software-Abschnitte mit vertraulichem Charakter enthalten, wobei diese Prüfeinrichtung Mittel (15) zum Ausführen einer Prüfung der richtigen Funktion der Hardware- und/oder Software-Abschnitte sowie Mittel zum Ausgeben der entsprechenden Informationen an die Schaltung (CI) umfasst, **dadurch gekennzeichnet, dass** sie umfasst:
- Mittel (11), um eine von der zu prüfenden integrierten Schaltung erzeugte Zufallszahl (RNG-C) zu empfangen;
- Mittel (13), um einen Chiffrierschlüssel (k) zu speichern; und
- Rechenmittel (12), um mit Hilfe eines Chiffrieralgorithmus ein zweites Passwort (Gₖ(RNG)-T) anhand des Chiffrierschlüssels (k) und der empfangenen Zufallszahl (RNG-C) zu berechnen;
- wobei die Rechenmittel (12) an die Ausgabemittel (14) angeschlossen sind, um das berechnete zweite Passwort (Gₖ(RNG)-T) zu der integrierten Schaltung (CI) zu schicken.

12. Prüfeinrichtung nach Anspruch 11, **dadurch gekennzeichnet, dass** die Rechenmittel (12) außerdem so beschaffen sind, dass sie mit Hilfe eines Chiffrieralgorithmus anhand des Chiffrierschlüssels (k) und der empfangenen Zufallszahl (RNG-C) ein viertes Passwort (Fₖ(RNG)-T) berechnen;
dass die Mittel (11) zum Empfangen der Zufallszahl außerdem so beschaffen sind, dass sie ein in der integrierten Schaltung (Cl) berechnetes drittes Passwort (Fₖ(RNG)-C) empfangen, und
dass sie außerdem Vergleichsmittel (17) umfasst, um die Übereinstimmung zwischen dem empfangenen dritten Passwort (Fₖ(RNG)-C) und dem berechneten vierten Passwort (Fₖ(RNG)-T) zu verifizieren, wobei den Rechenmitteln nur dann erlaubt wird, das zweite Passwort (Gₖ(RNG)-T) zu berechnen, wenn die Vergleichsmittel (17) eine vorgegebene Übereinstimmung zwischen dem dritten und dem vierten Passwort feststellen.

13. Prüfeinrichtung nach Anspruch 11, **dadurch gekennzeichnet, dass**:
- die Mittel (11) zum Empfangen der Zufallszahl außerdem so beschaffen sind, dass sie ein in der integrierten Schaltung (CI) berechnetes drittes Passwort (Fₖ(RNG)-C) empfangen, und
- die Rechenmittel (12) außerdem so beschaffen sind, dass sie mit Hilfe eines inversen Chiffrieralgorithmus und anhand des in der integrierten Schaltung (CI) berechneten dritten Passworts (Fₖ(RNG)-C) und des Chiffrierschlüssels (k) eine Zufallszahl (RNG-T) neu berechnen; und
dass sie außerdem Vergleichsmittel (17') umfasst, um die Übereinstimmung zwischen der empfangenen Zufallszahl (RNG-C) und der berechneten Zufallszahl (RNG-T) zu verifizieren, wobei den Rechenmitteln nur dann erlaubt wird, das zweite Passwort (Gₖ(RNG)-T) zu berechnen, wenn die Vergleichsmittel (17') eine vorgegebene Übereinstimmung zwischen diesen Zufallszahlen (RNG-C und RNG-T) feststellen.

## Claims

1. Method for testing an integrated circuit (CI) containing hardware and/or software parts (1) having a confidential nature, using a tester (T), this method being **characterised in that** it comprises the steps of :
- in said integrated circuit (CI):
generating a random number (RNG-C),
ciphering this random number (RNG-C) using a key (k) stored in said integrated circuit (CI) via a ciphering algorithm to obtain a first password (G_{K}(RNG)-C), and
sending the random number (RNG-C) to said tester (T),
- and, in said tester (T):
ciphering in parallel said random number (RNG-C) received using a key (k) identical to that used in said integrated circuit via an identical ciphering algorithm to that implemented in said integrated circuit (CI), to generate a second password (G_{K}(RNG)-T), and
sending said second password (G_{K}(RNG)-T) from the tester (T) to said integrated circuit (CI),
- then, in said integrated circuit (CI),
comparing said first (G_{K}(RNG)-C) and second (G_{K}(RNG)-T) passwords,
freeing a test path (3a) leading from said tester to said parts of a confidential nature (1), only if the comparison establishes a match between said first and second passwords (G_{K}(RNG)-C; G_{K}(RNG)-T), and
effecting the test of said elements (1) of a confidential nature.

2. Method according to claim 1, **characterised in that** it also comprises the steps of :
- in said integrated circuit (CI):
ciphering said random number (RNG-C) using said key (k) stored in the integrated circuit (CI) via said ciphering algorithm to obtain a third password (F_{K}(RNG)-C);
sending said third password (F_{K}(RNG)-C) to said tester (T); and
- in said tester (T):
ciphering said random number (RNG-C) received using said key (k) stored in said tester via said ciphering algorithm to obtain a fourth password (F_{K}(RNG)-T);
comparing said third and fourth passwords (F_{K}(RNG)-C; F_{K}(RNG)-T); and
authorising the ciphering of said second password (G_{K}(RNG)-T) via said tester (T) only if there is a match between said third and fourth passwords (F_{K}(RNG)-C; F_{K}(RNG)-T).

3. Method according to claim 1, **characterised in that** it also comprises the steps of :
- in said integrated circuit (CI):
ciphering said random number (RNG-C) using said key (k) stored in the integrated circuit (CI) via said ciphering algorithm to obtain a third password (F_{K}(RNG)-C);
sending said third password (F_{K}(RNG)-C) to said tester (T); and
- in said tester (T):
performing the reverse ciphering of said third password received (F_{K}(RNG)-C), using said key (k) stored in said tester (T) via said ciphering algorithm to find a calculated random number (RNG-T);
comparing the random number (RNG-T) received from said integrated circuit (CI) to said calculated random number (RNG-T), and
authorising the ciphering of said second password (G_{K}(RNG)-T) via said tester (T) only if there is a match between said received and calculated random numbers (RNG-T; RNG-T).

4. Method according to claims 2 or 3, **characterised in that** the ciphering of said third and/or fourth passwords (F_{K}(RNG)-C; F_{K}(RNG)-T) is made on the basis of a different number of clock strokes than that used for ciphering said first and second passwords (G_{K}(RNG)-C; G_{K}(RNG)-T).

5. Method according to any of claims 1 to 4, **characterised in that** it consists, as far as said matches are concerned, in checking that said passwords (G_{K}(RNG)-C; G_{K}(RNG)-T) - (F_{K}(RNG)-C; (F_{K}(RNG)-T) -, respectively said received and calculated random numbers (RNG-C; RNG-T) are equal.

6. Method according to any of claims 1 to 5, **characterised in that** it comprises the steps of, upon manufacturing said integrated circuit (CI), storing a predetermined value of said cipher key, and during execution of said test procedure using said tester (T), sending to said integrated circuit (CI), a cipher key value (k), checking whether said cipher key (k) sent has the predetermined value stored in said integrated circuit (CI), controlling said key sent to be stored in said integrated circuit (CI) in case an inequality is observed during said check and blocking in such case the storage in said circuit (CI) of any other cipher key.

7. Integrated circuit (CI) including hardware and/or software parts having a confidential nature (1) and means (2, 3, 16) for conditionally routing test data to said hardware and/or software parts, **characterised in that** it includes:
- a random number generator (6);
- means (7) for storing a cipher key (k);
- processing means (12) for calculating a first password (G_{K}(RNG)-C) from said key and a generated random number (RNG-C), using a cipher algorithm;
- means (10) for routing a random number (RNG-C) towards the exterior; and
- means (4) for comparing said first calculated password (G_{K}(RNG)-C) with a second password received from the exterior (G_{K}(RNG)-T), said second password being calculated in accordance with the random number generated by the generator, said comparison means being connected to said routing means (2, 3, 16) so as to make them transparent to said test data only if they observe a match between said first and second passwords (G_{K}(RNG)-C; G_{K}(RNG)-T).

8. Integrated circuit according to claim 7, **characterised in that** it includes means (9) for storing said first calculated password (G_{K}(RNG)-C), said storage means being placed before the comparison means to provide them said first stored password at the moment of comparison with the second password (G_{K}(RNG)-T).

9. Integrated circuit according to claim 7, **characterised in that** the means for storing the cipher key are an EEPROM memory which also includes a redundancy unit check.

10. Integrated circuit according to claim 7, **characterised in that** the processing means are provided for calculating a third password (F_{K}(RNG)-C) using the cipher key, from the random number generated (RNG-C) and the circuit cipher algorithm, said third password being intended to be sent towards the exterior with the random number to a specific tester.

11. Tester for integrated circuits including hardware and/or software parts having a confidential nature, this tester including means (15) for effecting a proper working test of said hardware and/or software parts to route the corresponding data to said circuit (CI), **characterised in that** it includes:
- means (11) for receiving a random number (RNG-C) generated by an integrated circuit to be tested;
- means (13) for storing a cipher key (k); and
- processing means (12) for calculating a second password (G_{K}(RNG)-T) from said cipher key (k) and from the received random number (RNG-C), using a cipher algorithm,
- said processing means (12) being connected to said routing means (14) for sending said second calculated password (G_{K}(RNG)-T) to said integrated circuit (CI).

12. Tester according to claim 11, **characterised in that** said processing means (12) are also arranged to calculate, using a cipher algorithm, a fourth password (F_{K}(RNG)-T) from said cipher key (k) and from the received random number (RNG-C);
**in that** said means (11) for receiving said random number are also arranged to receive a third password (F_{K}(RNG)-C) calculated in said integrated circuit (CI), and
**in that** it also includes comparison means (17) to check the match between said third received password (F_{K}(RNG)-C) and said fourth calculated password (F_{K}(RNG)-T), said processing means only being authorised to calculate said second password (G_{K}(RNG)-T) if the comparison means (17) observe a predetermined match between said third and fourth passwords.

13. Tester according to claim 11, **characterised in that**:
- said means (11) for receiving said random number are also arranged to receive a third password (F_{K}(RNG)-C) calculated in said integrated circuit (CI), and
- said processing means (12) are also arranged to recalculate a random number (RNG-T) using a reverse cipher algorithm, and from said third password (F_{K}(RNG)-C) calculated in said integrated circuit (CI) and from said cipher key (k); and
**in that** it also includes comparison means (17') for checking the match between said received random number (RNG)-C) and said calculated random number (RNG-T), said processing means only being authorised to calculate said second password (G_{K}(RNG)-T) if the comparison means (17') observe a predetermined match between said random numbers (RNG-C and RNG-T).
